# EUROPEAN PATENT APPLICATION

(11) **EP 4 811 476 A1**
(43) Date of publication of application: **23.09.2026**
(21) Application number: 26156843.0
(22) Date of filing: 06.02.2026
(51) Int. Cl.: H01M 10/04, H01M 10/052, H01M 10/0585, H01M 10/02

(54) **BATTERY AND METHOD FOR PRODUCING BATTERY**

(30) Priority: 21.03.2025 JP 2025047111
(71) Applicant: Toyota Jidosha Kabushiki Kaisha, Toyota-shi, Aichi-ken 471-8571 (JP)
(72) Inventor: KAKISHITA, Kenichi, Toyota-shi, Aichi-ken, 471-8571 (JP)
(74) Representative: Winter, Brandl - Partnerschaft mbB

(57) **Abstract**

At least one of a plurality of first laminate end faces (S11AC; S11AD; S11AE; S11AF; S11BC; S11BD; S11BE; S11BF) of a first electrode body (11A; 11B; 11C) includes an overlapping laminate end face (S11AC; S11BD) that overlaps with a site in the second electrode body (13) different from second laminate end faces (S13C; S13D; S13E; S13F) when viewed from a lamination direction (D). A thickness (L1; L7) of an end region (R11A1; R11B1) including the overlapping laminate end face (S11AC; S11BD) is smaller than a thickness (L2; L8) of a region (R11A2; R11B2) different from the end region (R11A1; R11B1).

## Description

### BACKGROUND OF THE INVENTION

### 1. Field of the Invention

The present disclosure relates to a battery and a method for producing a battery.

### 2. Description of Related Art

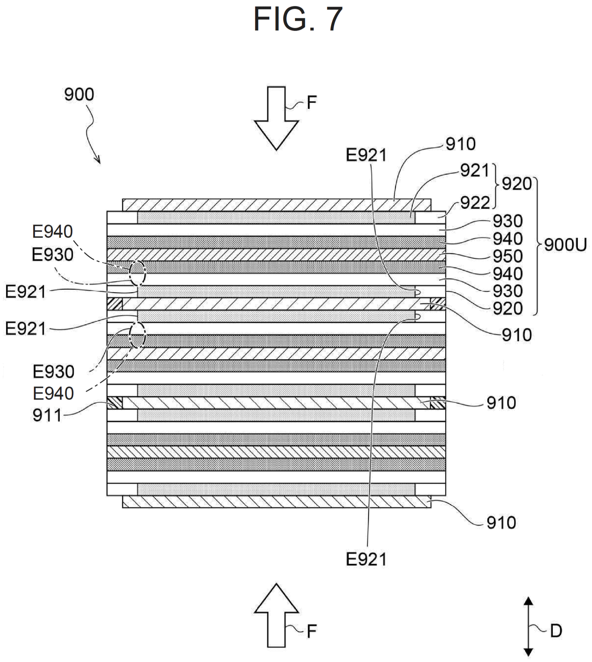

Japanese Unexamined Patent Application Publication No. 2021-57322 (JP 2021-57322 A) discloses a laminated battery (hereinafter also referred to as a "battery 900") shown in FIG. 7. The battery 900 includes a plurality of power generation elements 900U and a plurality of positive electrode current collectors 910. The power generation elements 900U are laminated with the positive electrode current collectors 910 being interposed therebetween. Each of the power generation elements 900U is formed by laminating a positive electrode layer 920, a solid electrolyte layer 930, a negative electrode active material layer 940, and a negative electrode current collector 950 in this order in a lamination direction D. The positive electrode layer 920 includes a positive electrode active material layer 921 and an insulating layer 922 provided at the ends of the positive electrode active material layer 921. The dimension of a main surface of the positive electrode current collector 910 in at least one direction is smaller than the dimension of the main surface of the positive electrode layer 920 in the same direction. An insulating adhesive 911 is disposed at the ends of the positive electrode current collector 910 so as to straddle the positive electrode current collector 910. The insulating adhesive 911 bonds the main surface of one power generation element 900U with the main surface of another power generation element 900U adjacent thereto. Each of the positive electrode current collector 910, the positive electrode layer 920, the solid electrolyte layer 930, the negative electrode active material layer 940, and the negative electrode current collector 950 has a uniform thickness.

### SUMMARY OF THE INVENTION

In order to reduce electric resistance between the layers, the battery 900 is usually used in a state where it is compressed by application of a restraint load F in the lamination direction D. The positive electrode active material layer 921 having a uniform thickness has sharp corners (i.e., non-beveled almost right-angled corners). Therefore, there is a concern that due to the sharp corners, stress may be concentrated on sites E930, E940 of at least one of the solid electrolyte layer 930 and the negative electrode active material layer 940 (hereinafter also referred to as the "negative electrode active material layer 940 and the like") corresponding to end faces E921 of the positive electrode active material layer 921. As a result, there is a risk that cracking may occur in the negative electrode active material layer 940 and the like. If cracking occurs in the negative electrode active material layer 940 and the like, the battery performance of the battery 900 will deteriorate.

For example, a power generation element of a battery may be produced by alternately laminating electrode bodies each having a uniform thickness and current collectors each having a uniform thickness. Each of the electrode bodies includes a positive electrode active material layer, an electrolyte layer, and a negative electrode active material layer. In the power generation element, lamination misalignment may be present between the electrode bodies due to, for example, handling during lamination of the electrode bodies. The "lamination misalignment between the electrode bodies" means that the laminate end faces of the electrode bodies adjacent to each other in a lamination direction do not lie in the same plane. Specifically, the "lamination misalignment between the electrode bodies" means that in a direction orthogonal to the lamination direction, the distance between the laminate end faces of the electrode bodies adjacent to each other in the lamination direction is 0.2 mm or more. If lamination misalignment is present between the electrode bodies, as described above, there is a risk that cracking may occur in the layers constituting the electrode bodies due to the sharp corners of the misaligned electrode body so that the battery performance of the battery deteriorates.

The present disclosure has been conceived in view of the above circumstances.

An embodiment of the present disclosure provides a battery in which cracking is less likely to occur in electrode bodies even when lamination misalignment is present between the electrode bodies and a method for producing the battery.

The present disclosure includes the following aspects.

A first aspect of the present disclosure relates to a battery including a first electrode body, a first current collector, and a second electrode body. The first electrode body, the first current collector, and the second electrode body are laminated in the order of the first electrode body, the first current collector, and the second electrode body along a lamination direction. The first electrode body includes a first electrode active material layer, an electrolyte layer, and a second electrode active material layer in the order of the first electrode active material layer, the electrolyte layer, and the second electrode active material layer along the lamination direction. The second electrode body includes the first electrode active material layer, the electrolyte layer, and the second electrode active material layer in the order of the first electrode active material layer, the electrolyte layer, and the second electrode active material layer along the lamination direction. The first electrode body has a plurality of first laminate end faces. The second electrode body has a plurality of second laminate end faces. At least one of the first laminate end faces of the first electrode body includes an overlapping laminate end face that overlaps with a site in the second electrode body different from the second laminate end faces when viewed from the lamination direction. The first electrode body further has an end region and a different region different from the end region. The end region includes the overlapping laminate end face of the first electrode body. A thickness of the end region is smaller than a thickness of the different region.

In the present disclosure, the "first electrode active material layer" may refer to one of a positive electrode active material layer and a negative electrode active material layer. The "second electrode active material layer" may refer to the other of the positive electrode active material layer and the negative electrode active material layer. The "positive electrode active material layer" may refer to a layer containing a positive electrode active material. The "negative electrode active material layer" may refer to a layer containing a negative electrode active material. The "electrolyte layer" may refer to a layer containing an electrolyte and not containing an active material (i.e., at least one of a positive electrode active material and a negative electrode active material). The "electrolyte" may refer to one that is interposed between a positive electrode active material layer and a negative electrode active material layer to conduct carrier ions. Specific examples of the electrolyte include a solid electrolyte, a non-aqueous electrolytic solution containing a lithium salt, (e.g., LiPF₆), a non-aqueous gel electrolytic solution, and an ion-conductive polymer. The "end region" may refer to a region between the overlapping laminate end face of the first electrode body and a site a specific distance (e.g., 0.2 mm to 0.5 mm) away from the overlapping laminate end face of the first electrode body when viewed from the lamination direction. The phrase "at least one of the laminate end faces of the first electrode body includes the overlapping laminate end face when viewed from the lamination direction" may mean that lamination misalignment is present between the first electrode body and the second electrode body.

In the first aspect, the thickness of the end region is smaller than the thickness of a site different from the end region of the first electrode body. That is, the first electrode body does not have sharp corners. Therefore, in the first aspect, stress exerted on a site in the second electrode body corresponding to the overlapping laminate end face of the first electrode body when a restraint load is applied in the lamination direction is relieved as compared to a case where the first electrode body has a uniform thickness. As a result, the battery of the first aspect is a battery in which cracking is less likely to occur in electrode bodies even when lamination misalignment is present between the electrode bodies.

In the battery according to the first aspect of the present disclosure, the thickness of the end region may gradually decrease toward the overlapping laminate end face.

Such a battery is a battery in which cracking is much less likely to occur in electrode bodies even when lamination misalignment is present between the electrode bodies.

In the battery according to the first aspect of the present disclosure, the end region may have a step portion such that a thickness on the overlapping laminate end face side is smaller than a thickness on a different portion of the end region from the step portion.

Such a battery is a battery in which cracking is much less likely to occur in electrode bodies even when lamination misalignment is present between the electrode bodies.

In the battery according to the first aspect of the present disclosure, the overlapping laminate end face may lie in a first plane that is different from a second plane that one of the second laminate end faces of the second electrode body lies in.

The phrase "the overlapping laminate end face may lie in a first plane that is different from a second plane that one of the second laminate end faces of the second electrode body lies in" means that the distance between the overlapping laminate end face of the first electrode body and the second laminate end face of the second electrode body may be 0.2 mm or more in a direction orthogonal to the lamination direction.

Such a battery is a battery in which cracking is much less likely to occur in electrode bodies even when lamination misalignment is present between the electrode bodies.

In the battery according to the first aspect of the present disclosure, a first plane that at least one of the first laminate end faces of the first electrode body lies in may be the same as a second plane that one of the second laminate end faces of the second electrode body lies in.

The "at least one of the laminate end faces of the first electrode body" refers to a laminate end face cut together with one of the second laminate end faces of the second electrode body. Further, the "first plane" may refer to a plane located at a distance of 0.1 mm or less from the second plane in a direction orthogonal to the lamination direction.

The structural efficiency of such a battery is superior as compared to a case where the laminate end faces of the first electrode body do not include a laminate end face that lies in the same plane as the laminate end face of the second electrode body. The "structural efficiency" may refer to the ratio of the volume of a power generation element included in the battery to the volume of the battery.

In the battery according to the first aspect of the present disclosure, a thickness of the first electrode active material layer in the end region may be smaller than a thickness of the first electrode active material layer in the different region different from the end region, and each of the electrolyte layer and the second electrode active material layer may have a uniform thickness.

Such a battery is a battery in which cracking is less likely to occur in electrode bodies even when lamination misalignment is present between the electrode bodies.

In the battery according to the first aspect of the present disclosure, the first electrode body may include the first electrode active material layer, the electrolyte layer, the second electrode active material layer, a second current collector, the second electrode active material layer, the electrolyte layer, and the first electrode active material layer in the order of the first electrode active material layer, the electrolyte layer, the second electrode active material layer, the second current collector, the second electrode active material layer, the electrolyte layer, and the first electrode active material layer along the lamination direction.

The structural efficiency of such a battery is much superior.

In the battery according to the first aspect of the present disclosure, an end misalignment amount in a section of the battery cut along the lamination direction may be larger than a length of the end region in an orthogonal direction orthogonal to the lamination direction, and the end misalignment amount may refer to a length between the overlapping laminate end face of the first electrode body and the laminate end face of the second electrode body in the orthogonal direction.

Such a battery is a battery in which cracking is much less likely to occur in electrode bodies even when lamination misalignment is present between the electrode bodies.

In the battery according to the first aspect of the present disclosure, the number of the first electrode bodies may be at least one, and the number of the second electrode bodies may be two or more.

The structural efficiency of such a battery is much superior.

In the battery according to the first aspect of the present disclosure, the electrolyte layer may contain a solid electrolyte.

The safety of such a battery is superior as compared to a case where the electrolyte layer does not contain a solid electrolyte.

In the battery according to the first aspect of the present disclosure, the different region may be adjacent to the end region in a direction perpendicular to the lamination direction.

In the battery according to the first aspect of the present disclosure, the thickness of the end region may gradually decrease toward the overlapping laminate end face in a direction from the different region toward the overlapping laminate end face.

The second aspect of the present disclosure relates to a battery production method for producing the battery described above, the method including: preparing a first electrode body semi-product including the first electrode active material layer having a uniform thickness, the electrolyte layer having a uniform thickness, and the second electrode active material layer having a uniform thickness in the order of the first electrode active material layer, the electrolyte layer, and the second electrode active material layer along the lamination direction; and reducing a thickness of at least one of the first electrode active material layer and the second electrode active material layer of the first electrode body semi-product in the end region.

In the battery production method for producing the battery described above according to the second aspect of the present disclosure, the end region may include at least one of an end of the first electrode active material layer of the first electrode body semi-product and an end of the second electrode active material layer of the first electrode body semi-product.

Such a battery production method makes it possible to efficiently produce a battery in which cracking is less likely to occur in electrode bodies even when lamination misalignment is present between the electrode bodies.

The present disclosure provides a battery in which cracking is less likely to occur in electrode bodies even when lamination misalignment is present between the electrode bodies and a method for producing the battery.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view of the appearance of a battery of a first embodiment;
FIG. 2 is a sectional view of the battery of the first embodiment shown in FIG. 1 taken along a line II-II;
FIG. 3 is a sectional view of the battery of the first embodiment shown in FIG. 1 taken along a line III-III;
FIG. 4 is a sectional view of a power generation element of the first embodiment shown in FIG. 1 taken along a line IV-IV;
FIG. 5 is a sectional view of the power generation element of the first embodiment shown in FIG. 1 taken along a line V-V;
FIG. 6 is a sectional view of a first electrode body of a second embodiment; and
FIG. 7 is a sectional view of a conventional laminated battery.

### DETAILED DESCRIPTION OF EMBODIMENTS

In the present disclosure, a numerical range expressed using "to" means a range including numerical values before and after "to" as a minimum value and a maximum value, respectively. In numerical ranges described stepwise in the present disclosure, an upper limit or a lower limit described in a certain numerical range may be replaced with an upper limit or a lower limit of another numerical range described stepwise. In the present disclosure, a combination of two or more preferred modes is a more preferred mode. In the present disclosure, the term "step" may refer not only to an independent step but also to a step that cannot clearly be distinguished from another step.

Hereinbelow, embodiments of a battery of the present disclosure will be described with reference to the drawings. In the drawings, the same or similar portions are denoted by the same reference sign, and the description thereof will not be repeated.

The battery of the present disclosure may be an all-solid-state battery using a solid electrolyte as an electrolyte or a semi-solid-state battery having a gel layer or the like containing an electrolytic solution and a polymer between an electrode and a solid electrolyte, and the solid electrolyte may contain an electrolytic solution in an amount of less than 10% by mass relative to the total amount of an electrolyte. It should be noted that the solid electrolyte may be a composite solid electrolyte containing an inorganic solid electrolyte and a polymer electrolyte. Among them, an all-solid-state battery is preferred.

### 1 First Embodiment

### 1.1 Battery

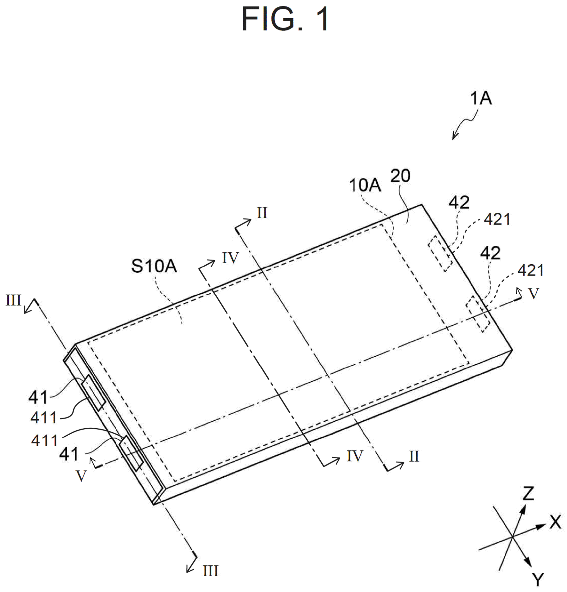

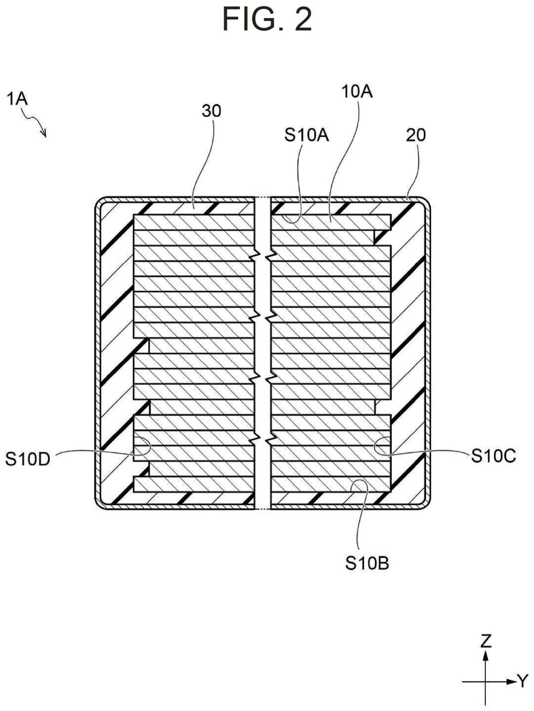

A battery 1A of a first embodiment is a solid-state battery. As shown in FIG. 1, the battery 1A includes a power generation element 10A, an exterior body 20, an electric insulator 30 (see FIG. 2), two positive terminals 41, and two negative terminals 42. The power generation element 10A is a rectangular parallelepiped object.

In the first embodiment, the longitudinal direction of a main surface S10A of the power generation element 10A is defined as an X-axis direction. The lateral direction of the main surface S10A of the power generation element 10A is defined as a Y-axis direction. The thickness direction of the power generation element 10A is defined as a Z-axis direction (an example of a lamination direction). The X axis, the Y axis, and the Z axis are orthogonal to each other. It should be noted that these directions do not limit the orientation of the battery of the present disclosure in use. The lamination direction may be expressed as a lamination direction D.

The positive terminals 41, the power generation element 10A, and the negative terminals 42 are disposed in this order along the X-axis direction. Each of the positive terminals 41 and the negative terminals 42 is electrically connected to the power generation element 10A. The electric insulator 30 is interposed between the power generation element 10A and the exterior body 20. The power generation element 10A and the electric insulator 30 are sealed with the exterior body 20, the positive terminals 41, and the negative terminals 42.

### 1.1.1 Power Generation Element

The power generation element 10A functions as a power generation element of the battery 1A.

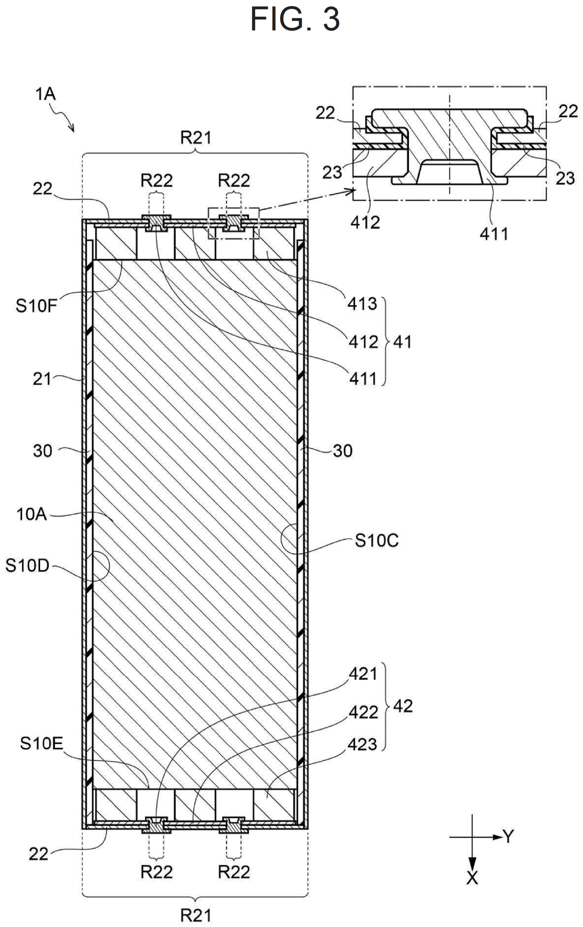

The power generation element 10A is a rectangular parallelepiped object. As shown in FIG. 2, the power generation element 10A has the main surface S10A, a main surface S10B, a side surface S10C, a side surface S10D, a side surface S10E (see FIG. 3), and a side surface S10F (see FIG. 3). The main surface S10A faces the main surface S10B in the Z-axis direction. The side surface S10C faces the side surface S10D in the Y-axis direction. The side surface S10E faces the side surface S10F in the X-axis direction.

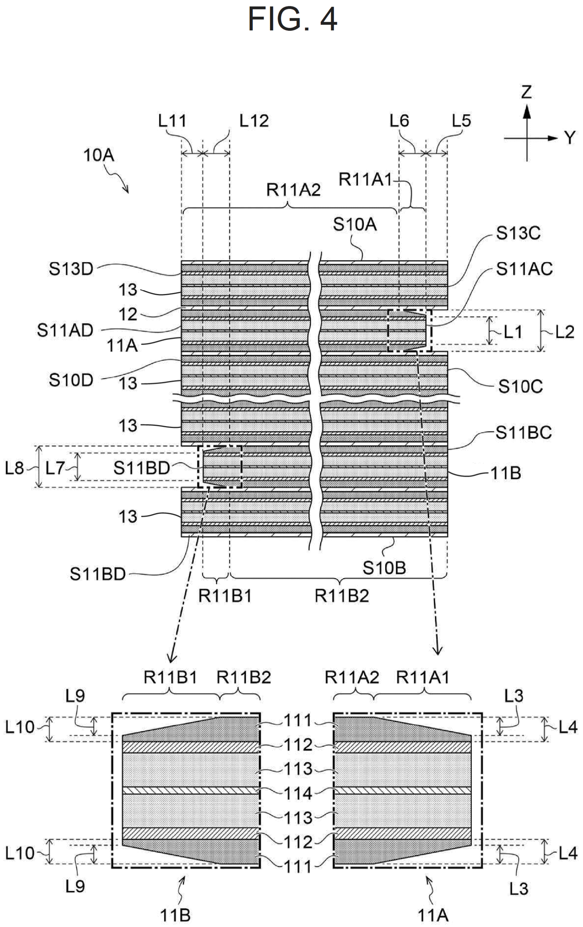

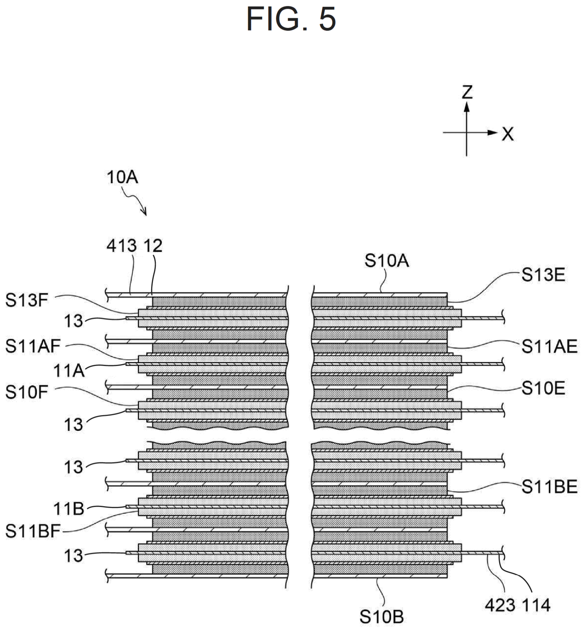

The details of the power generation element 10A will be descried later with reference to FIG. 4 and FIG. 5.

### 1.1.2 Exterior Body

The exterior body 20 houses the power generation element 10A.

The exterior body 20 is a rectangular parallelepiped object. In the first embodiment, the exterior body 20 is a can. The exterior body 20 includes a metallic rectangular tubular body 21, a pair of metallic caps 22, and an electric insulator 23. The metallic rectangular tubular body 21 has a pair of openings R21. The metallic caps 22 close the openings R21 of the metallic rectangular tubular body 21. The metallic caps 22 are fixed to the metallic rectangular tubular body 21 by a publicly-known method (e.g., welding or mechanical fastening). The electric insulator 23 is interposed between each of the positive terminals 41 and the metallic cap 22 and between each of the negative terminals 42 and the metallic cap 22.

The metallic rectangular tubular body 21 has a hollow portion that extends along the X-axis direction. The openings R21 communicate with each other through the hollow portion in the X-axis direction. The material of the metallic rectangular tubular body is a metal (e.g., aluminum, copper, stainless steel (SUS), or nickel).

The metallic caps 22 are plate-shaped objects. As shown in FIG. 3, each of the metallic caps 22 has a pair of through-holes R22 extending in the X-axis direction. The positive terminals 41 are exposed through the through-holes R22 of one of the metallic caps 22. The negative terminals 42 are exposed through the through-holes R22 of the other metallic cap 22. The material of the caps is a metal (e.g., aluminum, copper, stainless steel (SUS), or nickel).

The electric insulator 23 prevents electric contact between each of the positive and negative terminals 41, 42 and the metallic cap 22. The shape of the electric insulator 23 is not limited as long as the electric insulator 23 is interposed between each of the positive and negative terminals 41, 42 and the metallic cap 22. The material of the electric insulator may be a publicly-known resin (e.g., a thermoplastic resin or a thermosetting resin). The thermoplastic resin may be an elastomer.

### 1.1.3 Electric Insulator

The electric insulator 30 provides electric insulation between the power generation element 10A and the exterior body 20. The electric insulator 30 is interposed between the power generation element 10A and the exterior body 20. The electric insulator 30 entirely covers the main surfaces S10A, S10B and the side surfaces S10C, S10D of the power generation element 10A. The electric insulator 30 is in physical contact with the power generation element 10A and the exterior body 20. The material of the electric insulator 30 is not limited as long as it is a resin that can provide electric insulation between the power generation element 10A and the exterior body 20, and may be a publicly-known resin (e.g., a thermoplastic resin or a thermosetting resin). The thermoplastic resin may be an elastomer.

### 1.1.4 Positive Terminal

The positive terminals 41 are used to lead electricity generated in the power generation element 10A to the outside of the battery 1A. As shown in FIG. 3, the positive terminals 41 include two positive terminal parts 411, a positive electrode current collector plate 412, and a positive electrode current collector tab 413. The two positive terminal parts 411, the positive electrode current collector plate 412, and the positive electrode current collector tab 413 are electrically connected. The positive electrode current collector tab 413 is electrically connected to the power generation element 10A. The positive electrode current collector tab 413 is notched so as to come in physical contact with the positive electrode current collector plate 412 in three places. Examples of the material of the positive terminal parts 411, the positive electrode current collector plate 412, and the positive electrode current collector tab 413 include metals (e.g., aluminum, stainless steel (SUS), and nickel). The material of the positive terminal parts 411, the material of the positive electrode current collector plate 412, and the material of the positive electrode current collector tab 413 may be the same or different from each other. The details of the positive electrode current collector tab 413 will be described later.

### 1.1.5 Negative Terminal

The negative terminals 42 are used to lead electricity generated in the power generation element 10A to the outside of the battery 1A. The negative terminals 42 include two negative terminal parts 421, a negative electrode current collector plate 422, and a negative electrode current collector tab 423. The two negative terminal parts 421, the negative electrode current collector plate 422, and the negative electrode current collector tab 423 are electrically connected. The negative electrode current collector tab 423 is electrically connected to the power generation element 10A. Examples of the material of the negative terminal parts 421, the negative electrode current collector plate 422, and the negative electrode current collector tab 423 include metals (e.g., aluminum, stainless steel (SUS), and nickel). The material of the negative terminal parts 421, the material of the negative electrode current collector plate 422, and the material of the negative electrode current collector tab 423 may be the same or different from each other. The details of the negative electrode current collector tab 423 will be described later.

### 1.1.6 Details of Power Generation Element

As shown in FIG. 4 and FIG. 5, the power generation element 10A includes a plurality of first electrode bodies 11A, a plurality of first electrode bodies 11B, a plurality of positive electrode current collectors 12 (an example of a first current collector), and a plurality of second electrode bodies 13. The first electrode body 11A, 11B and the positive electrode current collector 12 are laminated in this order along the Z-axis direction.

Each of the number of the first electrode bodies 11A and the number of the first electrode bodies 11B is preferably as small as possible from the viewpoint of improving the structural efficiency of the battery 1A. Each of the number of the first electrode bodies 11A and the number of the first electrode bodies 11B may be one.

Each of the first electrode bodies 11A has a pair of laminate end faces S11AC, S11AD (see FIG. 4) that face each other in the Y-axis direction and a pair of laminate end faces S11AE, S11AF (see FIG. 5) that face each other in the X-axis direction. Each of the first electrode bodies 11B has a pair of laminate end faces S11BC, S11BD (see FIG. 4) that face each other in the Y-axis direction and a pair of laminate end faces S11BE, S11BF (see FIG. 5) that face each other in the X-axis direction. Each of the second electrode bodies 13 has a pair of laminate end faces S13C, S13D (see FIG. 4) that face each other in the Y-axis direction and a pair of laminate end faces S13E, S13F (see FIG. 5) that face each other in the X-axis direction.

The side surface S10C of the power generation element 10A includes the laminate end faces S11AC, S11BC, S13C. The side surface S10D of the power generation element 10A includes the laminate end faces S11AD, S11BD, S13D. The side surface S10E of the power generation element 10A includes the laminate end faces S11AE, S11BE, S13E. The side surface S10F of the power generation element 10A includes the laminate end faces S11AF, S11BF, S13F.

### 1.1.6.1 First Electrode Body

The first electrode body 11A has a monopolar structure. The first electrode body 11A is formed by laminating a positive electrode active material layer 111 (an example of a first electrode active material layer), an electrolyte layer 112 (an example of an electrolyte layer), a negative electrode active material layer 113 (an example of a second electrode active material layer), a negative electrode current collector 114 (an example of a second current collector), the negative electrode active material layer 113, the electrolyte layer 112, and the positive electrode active material layer 111 in this order along the Z-axis direction. The details of the positive electrode active material layer 111, the electrolyte layer 112, the negative electrode active material layer 113, and the negative electrode current collector 114 will be described later.

In the first embodiment, as shown in FIG. 4, the laminate end face S11AC of the first electrode body 11A is an overlapping laminate end face (hereinafter also referred to as an "overlapping laminate end face S11AC") that overlaps with a site in the second electrode body 13 different from the laminate end face S13C when viewed from the Z-axis direction. That is, the overlapping laminate end face S11AC and the laminate end face S13C of the second electrode body 13 do not lie in the same plane.

A thickness L1 (see FIG. 4) of an end region R11A1 including the overlapping laminate end face S11AC is smaller than a thickness L2 (see FIG. 4) of a region R11A2 (hereinafter also referred to as a "non-end region R11A2") different from the end region R11A1 of the first electrode body 11A. The thickness L1 of the end region R11A1 gradually decreases toward the overlapping laminate end face S11AC. That is, the positive electrode active material layer 111 in the end region R11A1 has a tapered shape. Specifically, a thickness L3 (see FIG. 4) of the positive electrode active material layer 111 in the end region R11A1 is smaller than a thickness L4 (see FIG. 4) of the positive electrode active material layer 111 in the non-end region R11A2. That is, each of the electrolyte layers 112 and the negative electrode active material layers 113 has a uniform thickness.

As shown in FIG. 4, in the section of the battery 1A cut along the Z-axis direction, an end misalignment amount L5 is larger than a length L6 of the end region R11A1 in the Y-axis direction. The end misalignment amount L5 refers to the length between the overlapping laminate end face S11AC of the first electrode body 11A and the laminate end face S13C of the second electrode body 13 in the Y-axis direction. The end misalignment amount L5 may be 0.5 mm, and the length L6 may be 0.6 mm.

The laminate end face S11AD of the first electrode body 11A lies in the same plane as the laminate end face S13D of the second electrode body 13.

### 1.1.6.2 First Electrode Body

The first electrode body 11B has a monopolar structure. The laminate configuration of the first electrode body 11B is the same as the laminate configuration of the first electrode body 11A. The first electrode body 11B is formed by laminating the positive electrode active material layer 111, the electrolyte layer 112, the negative electrode active material layer 113, the negative electrode current collector 114, the negative electrode active material layer 113, the electrolyte layer 112, and the positive electrode active material layer 111 in this order along the Z-axis direction.

As shown in FIG. 4, the laminate end face S11BD of the first electrode body 11B is an overlapping laminate end face (hereinafter also referred to as an "overlapping laminate end face S11BD") that overlaps with a site in the second electrode body 13 different from the laminate end face S13D when viewed from the Z-axis direction. That is, the overlapping laminate end face S11AD and the laminate end face S13D of the second electrode body 13 do not lie in the same plane

A thickness L7 (see FIG. 4) of an end region R11B1 including the overlapping laminate end face S11BD is smaller than a thickness L8 (see FIG. 4) of a region R11B2 (hereinafter also referred to as a "non-end region R11B2") different from the end region R11B1 of the first electrode body 11B. The thickness L7 of the end region R11B1 gradually decreases toward the overlapping laminate end face S11BD. That is, the positive electrode active material layer 111 in the end region R11B1 has a tapered shape. Specifically, a thickness L9 (see FIG. 4) of the positive electrode active material layer 111 in the end region R11B1 is smaller than a thickness L10 (see FIG. 4) of the positive electrode active material layer 111 in the non-end region R11B2. Each of the electrolyte layers 112 and the negative electrode active material layers 113 has a uniform thickness.

The thickness L7 may be the same as or different from the thickness L1. The thickness L8 is the same as the thickness L2. The ratio of the thickness L7 to the thickens L8 may fall in the same range as the ratio of the thickness L1 to the thickness L2. The ratio of the thickness L7 to the thickness L8 may be the same as or different from the ratio of the thickness L1 to the thickness L2. The thickness L9 may be the same as or different from the thickness L3. The thickness L10 is the same as the thickness L4. The ratio of the thickness L9 to the thickness L10 may fall in the same range as the ratio of the thickness L3 to the thickness L4. The ratio of the thickness L9 to the thickness L10 may be the same as or different from the ratio of the thickness L3 to the thickness L4.

As shown in FIG. 4, in the section of the battery 1A cut along the Z-axis direction, an end misalignment amount L11 is larger than a length L12 of the end region R11B1 in the Y-axis direction. The end misalignment amount L11 refers to the length between the overlapping laminate end face S11BD of the first electrode body 11B and the laminate end face S13D of the second electrode body 13 in the Y-axis direction. The end misalignment amount L11 may fall in the same range as the end misalignment amount L5. The end misalignment amount L11 may be the same as or different from the end misalignment amount L5. The length L12 may fall in the same range as the length L6. The length L12 may be the same as or different from the length L6. The end misalignment amount L11 may be 0.5 mm, and the length L12 may be 0.6 mm. Further, the first plane that at least one of the laminate end faces S11AC, S11AD, S11AE, S11AF, S11BC, S11BD, S11BE, S11BF of the first electrode body 11A, 11B, 11C lies in may be the same as a second plane that one of the laminate end faces S13C, S13D of the second electrode body 13 lies in.

The laminate end face S11BC of the first electrode body 11B lies in the same plane as the laminate end face S13C of the second electrode body 13. Further, the first plane that at least one of the laminate end faces S11AC, S11AD, S11AE, S11AF, S11BC, S11BD, S11BE, S11BF of the first electrode body 11A, 11B, 11C lies in may be the same as the second plane that one of the laminate end faces S13C, S13D of the second electrode body 13 lies in.

### 1.1.6.3 Positive Electrode Current Collector

The positive electrode current collector 12 collects electric current from the positive electrode active material layer 111. The material of the positive electrode current collector is not limited, and examples thereof include stainless steel, aluminum, copper, nickel, iron, titanium, carbon, and aluminum alloys. The material of the positive electrode current collector may be aluminum. The positive electrode current collector is in the form of, for example, foil or mesh. The positive electrode current collector may be configured to have a buffer layer, an elastic layer, or a positive temperature coefficient (PTC) thermistor layer provided on the surface thereof.

### 1.1.6.4 Second Electrode Body

The second electrode body 13 has a monopolar structure. The laminate configuration of the second electrode body 13 is the same as the laminate configuration of the first electrode body 11A. The second electrode body 13 is formed by laminating the positive electrode active material layer 111, the electrolyte layer 112, the negative electrode active material layer 113, the negative electrode current collector 114, the negative electrode active material layer 113, the electrolyte layer 112, and the positive electrode active material layer 111 in this order along the Z-axis direction.

### 1.1.6.5 Layers of Electrode Body

### 1.1.6.5.1 Positive Electrode Active Material Layer

The positive electrode active material layer 111 contains a positive electrode active material. If necessary, the positive electrode active material layer 111 may contain at least one of a solid electrolyte for positive electrodes, a conductive additive, and a binder.

As the positive electrode active material, a lithium composite oxide is preferably contained. The lithium composite oxide may contain at least one selected from the group consisting of F, Cl, N, S, Br, and I. The lithium composite oxide may have a crystal structure belonging to at least one space group selected from among space groups R-3m, Immm, and P63-mmc. The main arrangement of a transition metal, oxygen, and lithium in the lithium composite oxide may have an O2-type structure. The positive electrode active material may be a publicly-known positive electrode active material.

The solid electrolyte for positive electrodes preferably contains one selected from the group consisting of a sulfide solid electrolyte, an oxide solid electrolyte, and a halide solid electrolyte. The solid electrolyte may be a publicly-known solid electrolyte. At least part of the surface of the positive electrode active material is preferably coated with a sulfide solid electrolyte, an oxide solid electrolyte, or a halide solid electrolyte.

The sulfide solid electrolyte preferably contains a sulfur (S) element as a main component of an anionic element and preferably further contains, for example, a lithium (Li) element and an A element in addition to the S element. The A element is at least one selected from the group consisting of P, As, Sb, Si, Ge, Sn, B, Al, Ga, and In. The sulfide solid electrolyte may further contain at least one of O and a halogen element. Examples of the halogen element (X) include F, Cl, Br, and I. The composition of the sulfide solid electrolyte is not limited and may be, for example, xLi₂S·(100-x)P₂S₅ (70 ≤ x ≤ 80) or yLiI·zLiBr·(100-y-z)(xLi₂S·(1-x)P₂S₅) (0.7 ≤ x ≤ 0.8, 0 ≤ y ≤ 30, 0 ≤ z ≤ 30). The sulfide solid electrolyte may have a composition represented by the following general formula (1).

Li₄₋ₓGe₁₋ₓPₓS₄ (0 < x < 1) · · · Formula (1)

In the formula (1), at least part of Ge may be replaced with at least one selected from the group consisting of Sb, Si, Sn, B, Al, Ga, In, Ti, Zr, V, and Nb. Further, at least part of P may be replaced with at least one selected from the group consisting of Sb, Si, Sn, B, Al, Ga, In, Ti, Zr, V, and Nb. Part of Li may be replaced with at least one selected from the group consisting of Na, K, Mg, Ca, and Zn. Part of S may be replaced with a halogen. The halogen is at least one of F, Cl, Br, and I.

The halide solid electrolyte may have a composition (LTAF) represented by the following general formula (2).

Li_{6-(4-x)b}(Ti₁₋ₓAlₓ)_{b}F₆ (0 < x < 1, 0 < b ≤ 1.5) · · · Formula (2)

Examples of the conductive additive include carbon materials (e.g., carbon black, carbon nanotubes, graphite, and carbon fluoride), metallic materials (e.g., aluminum powder and conductive whisker), and conductive polymer materials (e.g., polyaniline, polypyrrole, and polythiophene).

Examples of the binder include vinyl halide resins (e.g., polyvinylidene fluoride (PVdF)), rubbers (e.g., acrylate-butadiene rubber (ABS) and styrene-butadiene rubber (SBR)), and polyolefin-based resins (e.g., polyethylene (PE) and polypropylene (PP)).

### 1.1.6.5.2 Solid Electrolyte Layer

The electrolyte layer 112 contains a solid electrolyte. The solid electrolyte is not limited and may be an assembly of a plurality of particles. The solid electrolyte preferably contains one selected from the group consisting of a sulfide solid electrolyte, an oxide solid electrolyte, and a halide solid electrolyte. The solid electrolyte may be a publicly-known solid electrolyte. The sulfide solid electrolyte may be the same as that described as an example of the sulfide solid electrolyte contained in the solid electrolyte for positive electrodes.

The solid electrolyte layer may further contain a binder. The binder may be used to bind together particles of the solid electrolyte. The binder may be used to bind together the solid electrolyte and the positive electrode active material layer 111 or the negative electrode active material layer 113.

### 1.1.6.5.3 Negative Electrode Active Material Layer

The negative electrode active material layer 113 contains a negative electrode active material. If necessary, the negative electrode active material layer 113 may contain at least one of a solid electrolyte for negative electrodes, a conductive additive, and a binder.

Examples of the negative electrode active material include an Li-based active material (e.g., metallic lithium), a carbon-based active material (e.g., graphite), an oxide-based active material (e.g., lithium titanate), and an Si-based active material (e.g., elemental Si).

The solid electrolyte for negative electrodes may be the same as that described as an example of the solid electrolyte for positive electrodes contained in the positive electrode active material layer. At least part of the surface of the negative electrode active material is preferably coated with a sulfide solid electrolyte, an oxide solid electrolyte, or a halide solid electrolyte.

The conductive additive may be the same as that described as an example of the conductive additive that may be used for the positive electrode active material layer.

The binder may be the same as that described as an example of the binder that may be used for the positive electrode active material layer.

### 1.1.6.5.4 Negative Electrode Current Collector

The negative electrode current collector 114 collects electric current from the negative electrode active material layer 113. The material of the negative electrode current collector is not limited, and examples thereof include stainless steel, aluminum, copper, nickel, iron, titanium, and carbon. The material of the negative electrode current collector may be aluminum. The negative electrode current collector is in the form of, for example, foil or mesh. The negative electrode current collector may be configured to have a buffer layer, an elastic layer, or a positive temperature coefficient (PTC) thermistor layer provided on the surface thereof.

### 1.1.6.5.5 Positive Electrode Current Collector Tab

The positive electrode current collector tab 413 electrically connects the positive electrode current collector 12 and the positive electrode current collector plate 412. As shown in FIG. 3, the positive electrode current collector tab 413 projects toward the X-axis negative direction relative to the side surface S10F of the power generation element 10A. The positive electrode current collector tab 413 is notched so as to come in physical contact with the positive electrode current collector plate 412 in three places. A bundle including the positive electrode current collector tabs 413 is electrically connected to the positive electrode current collector plate 412. The positive electrode current collector tab 413 and the positive electrode current collector 12 may be formed separately or integrally.

### 1.1.6.5.6 Negative Electrode Current Collector Tab

The negative electrode current collector tab 423 electrically connects the negative electrode current collector 114 and the negative electrode current collector plate 422. As shown in FIG. 3, the negative electrode current collector tab 423 projects toward the X-axis positive direction relative to the side surface S10E of the power generation element 10A. The negative electrode current collector tab 423 is notched so as to come in physical contact with the negative electrode current collector plate 422 in three places. A bundle including the negative electrode current collector tabs 423 is electrically connected to the negative electrode current collector plate 422. The negative electrode current collector tab 423 and the negative electrode current collector 114 may be formed separately or integrally.

### 1.1.7 Intended Use

The battery 1A may be used as a power source of electric equipment (e.g., a vehicle, an electronic device, or electric power storage system). Examples of the vehicle include an electrified four-wheel vehicle, an electrified two-wheel vehicle, a petrol-driven vehicle, and a diesel vehicle. Examples of the electrified four-wheel vehicle include a battery electric vehicle (BEV), a plug-in hybrid electric vehicle (PHEV), and a hybrid electric vehicle (HEV). Examples of the electrified two-wheel vehicle include an electrified motorcycle and an electrically-assisted bicycle. Examples of the electronic device include handheld devices (e.g., smartphones, tablet computers, and audio players), portable devices (e.g., notebook computers and compact disc (CD) players), and mobile devices (e.g., electric power tools and professional-use video cameras). Among them, the battery 1A is preferably used as a drive power source for hybrid electric vehicles, plug-in hybrid electric vehicles, or battery electric vehicles.

### 1.2 Method for Producing Battery

A battery production method of the first embodiment is a method for producing the battery 1A. The method includes a power generation element production step, an electric insulator formation step, an insertion step, and a sealing step. The power generation element production step, the insertion step, and the sealing step may be performed in this order.

### 1.2.1 Power Generation Element Production Step

In the power generation element production step, a power generation element with current collector tabs is produced. The power generation element with current collector tabs includes the power generation element 10A, the positive electrode current collector tab 413 electrically connected to the power generation element 10A, and the negative electrode current collector tab 423 electrically connected to the power generation element 10A.

The power generation element production step includes a preparation step, an end processing step, a lamination step, and a cutting step. The preparation step, the end processing step, the lamination step, and the cutting step may be performed in this order.

### 1.2.1.1 Preparation Step

In the preparation step, electrode body sheets and positive electrode current collector sheets are prepared. The electrode body sheets are materials of the first electrode body 11A, the first electrode body 11B, and the second electrode body 13. The positive electrode current collector sheets are materials of the positive electrode current collector 12 having the positive electrode current collector tab 413. Each of the electrode body sheets is formed by laminating the positive electrode active material layer 111, the electrolyte layer 112, the negative electrode active material layer 113, the negative electrode current collector 114 having the negative electrode current collector tab 423, the negative electrode active material layer 113, the electrolyte layer 112, and the positive electrode active material layer 111 in this order along the Z-axis direction. Each of the layers constituting the electrode body sheet has a uniform thickness. That is, a first electrode body semi-product may be prepared in which the positive electrode active material layer 111 having a uniform thickness, the electrolyte layer 112 having a uniform thickness, the negative electrode active material layer 113 having a uniform thickness are laminated in the order of the positive electrode active material layer 111, the electrolyte layer 112, and the negative electrode active material layer 113 along the lamination direction D.

The electrode body sheet may be prepared by a publicly-known method. The positive electrode current collector sheet may be prepared by a publicly-known method.

Hereinbelow, the electrode body sheet as a material of the first electrode body 11A is also referred to as a "first first-electrode body semi-product". Hereinbelow, the electrode body sheet as a material of the first electrode body 11B is also referred to as a "second first-electrode body semi-product".

### 1.2.1.2 End Processing Step

In the end processing step, the first first-electrode body semi-product and the second first-electrode body semi-product are subjected to end processing.

Specifically, in the end processing step, the thickness of the positive electrode active material layer 111, which has a uniform thickness L4 (see FIG. 4), in the end region R11A1 of the first first-electrode body semi-product is reduced. As a result, the thickness L3 of the positive electrode active material layer 111 in the end region R11A1 becomes smaller than the thickness L4. The end region R11A1 may include at least one of the end of the positive electrode active material layer 111 of the first first-electrode body semi-product and the end of the negative electrode active material layer 113 of the first first-electrode body semi-product.

In the end processing step, the thickness of the positive electrode active material layer 111, which has a uniform thickness L10 (see FIG. 4), in the end region R11B1 of the second first-electrode body semi-product is reduced. As a result, the thickness L9 of the positive electrode active material layer 111 in the end region R11B1 becomes smaller than the thickness L10. The end region R11B1 may include at least one of the end of the positive electrode active material layer 111 of the second first-electrode body semi-product and the end of the negative electrode active material layer 113 of the second first-electrode body semi-product.

A method for end processing is not limited, and examples thereof include laser processing (e.g., laser trimming) and mechanical processing (e.g., pressing using a pair of rolls or cutting using an end mill). The thickness of the positive electrode active material layer 111 in the end region R11A1, R11B1 may be reduced by a publicly-known method.

### 1.2.1.3 Lamination Step

In the lamination step, the first or second first-electrode body semi-product, the positive electrode current collector sheet, and the electrode body sheet are laminated in this order along the Z-axis direction. As a result, a laminated body is obtained.

A method for lamination is not limited and may be a publicly-known method.

### 1.2.1.4 Cutting Step

In the cutting step, the laminated body is cut at one time along the Z-axis direction. As a result, a power generation element with current collector tabs is obtained. The cut surfaces of the laminated body correspond to the side surfaces S10C, S10D, which face each other in the Y-axis direction, of the power generation element 10A.

A method for cutting is not limited and may be a publicly-known method.

### 1.2.2 Electric Insulator Formation Step

In the electric insulator formation step, the electric insulator 30 is formed on at least one of the power generation element 10A and the exterior body 20.

The electric insulator 30 may be formed by a publicly-known method. The material of the electric insulator 30 may be a film-shaped processed product (i.e., a freestanding film) or a paste-like material.

### 1.2.3 Insertion Step

In the insertion step, the power generation element 10A is inserted into the exterior body 20.

A method for inserting the power generation element 10A is not limited as long as it is a publicly-known method.

### 1.2.4 Sealing Step

In the sealing step, the power generation element 10A in the exterior body 20 is sealed. As a result, a battery 1A is obtained.

A method for sealing is not limited as long as it is a publicly-known method.

### 1.3 Functions and Effects

As has been described with reference to FIG. 1 to FIG. 5, the battery 1A includes the first electrode body 11A, 11B, the positive electrode current collector 12, and the second electrode body 13 in this order along the lamination direction. That is, the first electrode body 11A, the positive electrode current collector 12, and the second electrode body 13 may be laminated in the order of the first electrode body 11A, the positive electrode current collector 12, and the second electrode body 13 along the lamination direction D. The first electrode body 11B, the positive electrode current collector 12, and the second electrode body 13 may be laminated in the order of the first electrode body 11B, the positive electrode current collector 12, and the second electrode body 13. Each of the first electrode bodies 11A, 11B and the second electrode body 13 includes the positive electrode active material layer 111, the electrolyte layer 112, and the negative electrode active material layer 113 in this order along the Z-axis direction. That is, each of the first electrode bodies 11A, 11B may include the positive electrode active material layer 111, the electrolyte layer 112, and the negative electrode active material layer 113 in the order of the positive electrode active material layer 111, the electrolyte layer 112, and the negative electrode active material layer 113 along the lamination direction D. The second electrode body 13 may include the positive electrode active material layer 111, the electrolyte layer 112, and the negative electrode active material layer 113 in the order of the positive electrode active material layer 111, the electrolyte layer 112, and the negative electrode active material layer 113 along the lamination direction D. The four laminate end faces of the first electrode body 11A, 11B include the overlapping laminate end face S11AC, S11BD that overlaps with a site in the second electrode body 13 different from the laminate end face S13C, S13D when viewed from the Z-axis direction. That is, the first electrode body 11A may have a plurality of laminate end faces, and the laminate end faces of the first electrode body 11A may be the laminate end faces S11AC, S11AD, S11AE, S11AF. The first electrode body 11B may have a plurality of laminate end faces, and the laminate end faces of the first electrode body 11B may be the laminate end faces S11BC, S11BD, S11BE, S11BF. The second electrode body 13 may have a plurality of laminate end faces, and the laminate end faces of the second electrode body 13 may be the laminate end faces S13C, S13D, S13E, S13F. The thickness L1, L7 of the end region R11A1, R11B1, including the overlapping laminate end face S11AC, S11BD, of the first electrode body 11A, 11B is smaller than the thickness L2, L8 of the non-end region R11A2, R11B2 of the first electrode body 11A, 11B. That is, the first electrode body 11A may have the end region R11A1 and the non-end region R11A2 that is a region different from the end region R11A1. The first electrode body 11B may have the end region R11B1 and the non-end region R11B2 that is a region different from the end region R11B1. Further, the end region R11A1 may include the overlapping laminate end face S11AC, and the end region R11B1 may include the overlapping laminate end face S11BD. The non-end region R11A2 may be adjacent to the end region R11A1 in the Y-axis direction, and the non-end region R11B2 may be adjacent to the end region R11B1 in the Y-axis direction.

That is, the first electrode body 11A, 11B does not have sharp corners. Therefore, stress exerted on a site in the second electrode body 13 corresponding to the overlapping laminate end face S11AC, S11BD of the first electrode body 11A, 11B when a restraint load is applied in the Z-axis direction is relieved as compared to a case where the first electrode body 11A, 11B has a uniform thickness. As a result, even when lamination misalignment is present between the first electrode body 11A, 11B and the second electrode body 13 in the battery 1A, cracking is less likely to occur in the electrode bodies 11A, 11B, 13.

As has been described with reference to FIG. 1 to FIG. 5, the thickness L1, L7 of the end region R11A1, R11B1 gradually decreases toward the overlapping laminate end face S11AC, S11BD. That is, the thickness L1 of the end region R11A1 may gradually decrease toward the overlapping laminate end face S11AC in a direction from the non-end region R11A2 toward the overlapping laminate end face S11AC, and the thickness L7 of the end region R11B1 may gradually decrease toward the overlapping laminate end face S11BD in a direction from the non-end region R11B2 toward the overlapping laminate end face S11BD. Therefore, even when lamination misalignment is present between the first electrode body 11A, 11B and the second electrode body 13, cracking is much less likely to occur in the electrode bodies 11A, 11B, 13.

As has been described with reference to FIG. 1 to FIG. 5, the overlapping laminate end face S11AC and the laminate end face S13C of the second electrode body 13 do not lie in the same plane. The overlapping laminate end face S11BD and the laminate end face S13D of the second electrode body 13 do not lie in the same plane. That is the overlapping laminate end face S11AC, S11BD may lie in a first plane that is different from a second plane that one of the laminate end faces S13C, S13D, S13E, S13F of the second electrode body 13 lies in.

Therefore, even when lamination misalignment is present between the first electrode body 11A, 11B and the second electrode body 13, cracking is much less likely to occur in the electrode bodies 11A, 11B, 13.

As has been described with reference to FIG. 1 to FIG. 5, one of the four laminate end faces of the first electrode body 11A includes the laminate end face S11AD that lies in the same plane as the laminate end face S13D of the second electrode body 13. One of the four laminate end faces of the first electrode body 11B includes the laminate end face S11BC that lies in the same plane as the laminate end face S13C of the second electrode body 13. Therefore, the volumetric efficiency of the battery 1A is superior as compared to a case where the four laminate end faces of the first electrode body 11A, 11B do not include a laminate end face that lies in the same plane as the laminate end face of the second electrode body 13.

As has been described with reference to FIG. 1 to FIG. 5, the thickness L3, L9 of the positive electrode active material layer 111 in the end region R11A1, R11B1 is smaller than the thickness L4, L10 of the positive electrode active material layer 111 in the non-end region R11A2, R11B2. Each of the electrolyte layers 112 and the negative electrode active material layers 113 has a uniform thickness.

Therefore, even when lamination misalignment is present between the first electrode body 11A, 11B and the second electrode body 13, cracking is much less likely to occur in the electrode bodies 11A, 11B, 13.

As has been described with reference to FIG. 1 to FIG. 5, the first electrode body 11A, 11B includes the positive electrode active material layer 111, the electrolyte layer 112, the negative electrode active material layer 113, the negative electrode current collector 114, the negative electrode active material layer 113, the electrolyte layer 112, and the positive electrode active material layer 111 in this order along the Z-axis direction.
Therefore, the battery 1A is much superior in structural efficiency.

As has been described with reference to FIG. 1 to FIG. 5, the end misalignment amount L5, L11 in the section of the battery 1A cut along the Z-axis direction is larger than the length L6, L12 of the end region R11A1, R11B1 in the Y-axis direction.

Therefore, even when lamination misalignment is present between the first electrode body 11A, 11B and the second electrode body 13, cracking is much less likely to occur in the electrode bodies 11A, 11B, 13.

As has been described with reference to FIG. 1 to FIG. 5, the electrolyte layer 112 contains a solid electrolyte.
Therefore, the safety of the battery 1A is superior as compared to a case where the electrolyte layer does not contain a solid electrolyte.

As has been described with reference to FIG. 1 to FIG. 5, the battery production method of the first embodiment includes the end processing step.

Therefore, it is possible to efficiently produce the battery 1A in which even when lamination misalignment is present between the first electrode body 11A, 11B and the second electrode body 13, cracking is much less likely to occur in the electrode bodies 11A, 11B, 13.

### 2. Second Embodiment

### 2.1 Battery

A battery 1B according to a second embodiment is the same as the battery 1A according to the first embodiment except that the shape of the end region of the first electrode body is different.

The battery 1B includes a power generation element 10B, an exterior body 20, an electric insulator 30, positive terminals 41, and negative terminals 42.

The power generation element 10B includes a plurality of first electrode bodies 11C, a plurality of first electrode bodies 11B, a plurality of positive electrode current collectors 12, and a plurality of second electrode bodies 13. The first electrode body 11C, 11B and the positive electrode current collector 12 are laminated in this order along the Z-axis direction.

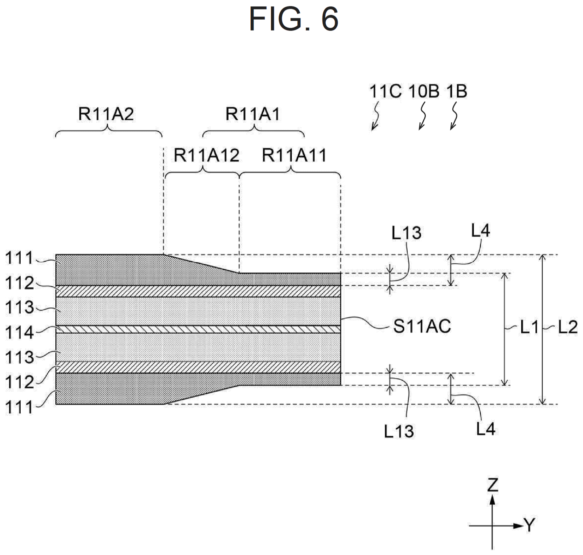

The first electrode body 11C is the same as the first electrode body 11A except that the shape of the end region R11A1 is changed. The thickness L1 (see FIG. 6) of the end region R11A1 is smaller than the thickness L2 (see FIG. 6) of the non-end region R11A2 of the first electrode body 11C. The end region R11A1 has a step such that a thickness L13 on the overlapping laminate end face S11AC side is smaller. Specifically, the end region R11A1 has a tip region R11A11 and a connecting region R11A12 that are continuous in the Y-axis direction. The tip region R11A11 is located on the overlapping laminate end face S11AC side. The positive electrode active material layer 111 in the tip region R11A11 has a uniform thickness L13. The connecting region R11A12 is a site that connects the non-end region R11A2 and the tip region R11A11. The thickness of the positive electrode active material layer 111 in the connecting region R11A12 gradually decreases toward the tip region R11A11. The step is formed by the tip region R11A11 and the connecting region R11A12. The first electrode body 11B, the positive electrode current collector 12, and the second electrode body 13 may be laminated in the order of the first electrode body 11B, the positive electrode current collector 12, and the second electrode body 13. The first electrode body 11C, the positive electrode current collector 12, and the second electrode body 13 may be laminated in the order of the first electrode body 11C, the positive electrode current collector 12, and the second electrode body 13 along the lamination direction D.

### 2.2 Functions and Effects

The battery 1B is the same as the battery 1A except that the shape of the end region R11A1 is changed from a tapered shape to a step shape. Therefore, the battery 1B has the same functions and effects as the battery 1A.

As has been described with reference to FIG. 6, in the battery 1B, the end region R11A1 of the first electrode body 11C has a step portion such that the thickness L13 on the overlapping laminate end face S11AC side is smaller.

Therefore, even when lamination misalignment is present between the electrode bodies 11C, 11B, 13, cracking is much less likely to occur in the electrode bodies 11C, 11B, 13.

### 3. Modifications

In the first embodiment, the thickness L3, L9 of the end region R11A1, R11B1 of the first electrode body 11A, 11B gradually decreases toward the overlapping laminate end face S11AC, S11BD. In the second embodiment, the end region R11A1 of the first electrode body 11C has a step portion such that the thickness L13 on the overlapping laminate end face S11AC side is smaller. The present disclosure is not limited thereto. The shape of the end region of the first electrode body is not limited as long as the thickness of the end region of the first electrode body is smaller than the thickness of a region different from the end region of the first electrode body. The end region of the first electrode body may have a thimble shape.

In the first embodiment and the second embodiment, one of the four laminate end faces of the first electrode body 11A, 11B, 11C includes the laminate end face S11AD, S11BC that lies in the same plane as the laminate end face S13D, S13C of the second electrode body 13, but the present invention is not limited thereto. The laminate end faces of the first electrode body may not include a laminate end face that lies in the same plane as the laminate end face of the second electrode body.

In the first embodiment and the second embodiment, the thickness L3, L9 of the positive electrode active material layer 111 in the end region R11A1, R11B1 is smaller than the thickness of the positive electrode active material layer 111 in the non-end region R11A2, R11B2, and each of the electrolyte layers 112 and the negative electrode active material layers 113 has a uniform thickness, but the present disclosure is not limited thereto. The positive electrode active material layers 111 may have a uniform thickness. The thickness of at least one of the electrolyte layer and the negative electrode active material layer in the end region may be smaller than that in the non-end region.

In the first embodiment and the second embodiment, the first electrode body 11A, 11B, 11C includes the positive electrode active material layer 111, the electrolyte layer 112, the negative electrode active material layer 113, the negative electrode current collector 114, the negative electrode active material layer 113, the electrolyte layer 112, and the positive electrode active material layer 111 in this order along the Z-axis direction, but the present disclosure is not limited thereto. That is, each of the first electrode bodies 11A, 11B, 11C may include the positive electrode active material layer 111, the electrolyte layer 112, the negative electrode active material layer 113, the negative electrode current collector 114, the negative electrode active material layer 113, the electrolyte layer 112, the positive electrode active material layer 111 in the order of the positive electrode active material layer 111, the electrolyte layer 112, the negative electrode active material layer 113, the negative electrode current collector 114, the negative electrode active material layer 113, the electrolyte layer 112, and the positive electrode active material layer 111 along the lamination direction D. The first electrode body may include the negative electrode active material layer, the solid electrolyte layer, the positive electrode active material layer, the positive electrode current collector, the positive electrode active material layer, the solid electrolyte layer, and the negative electrode active material layer in this order along the Z-axis direction. The first electrode body may include only the positive electrode active material layer, the solid electrolyte layer, and the negative electrode active material layer.

In the first embodiment and the second embodiment, the end misalignment amount L5, L11 in the section of the battery 1A, 1B cut along the Z-axis direction is larger than the length L6, L12, but the present disclosure is not limited thereto. The end misalignment amount L5, L11 may be the same as or smaller than the length L6, L12.

In the first embodiment and the second embodiment, the number of the first electrode bodies 11A, 11B and the number of the second electrode bodies 13 in the battery 1A, 1B are two or more, but the present disclosure is not limited thereto. The number of the second electrode bodies may be one.

In the first embodiment and the second embodiment, the electrolyte layer contains a solid electrolyte, but the present disclosure is not limited thereto. The electrolyte layer may not contain a solid electrolyte. The electrolyte layer may contain an electrolyte different from a solid electrolyte. Examples of the electrolyte different from a solid electrolyte include a non-aqueous electrolytic solution containing a lithium salt (e.g., LiPF₆), a non-aqueous gel electrolytic solution, and an ion-conductive polymer.

In the first embodiment and the second embodiment, the power generation element 10A includes two types of first electrode bodies 11A, 11B, and the power generation element 10B includes two types of first electrode bodies 11C, 11B, but the present disclosure is not limited thereto. The power generation element may include one type of first electrode body or may include three or more types of first electrode bodies. The first electrode body 11A may further have the end region R11B1.

In the first embodiment and the second embodiment, the first electrode body 11A has the end region R11A1 only on the laminate end face S11AC side, but may have the end region R11A1 also on the laminate end face S11AD side.

In the first embodiment and the second embodiment, the exterior body 20 is a rectangular tubular can, but the present disclosure is not limited thereto. The exterior body may be a battery can (e.g., a cylindrical battery can or a coin-shaped battery can) or a laminated exterior body.

In the first embodiment and the second embodiment, the first electrode body 11A, 11B, 11C and the second electrode body 13 have a monopolar structure, but the present disclosure is not limited thereto. The first electrode body and the second electrode body may have a bipolar structure.

In the first embodiment and the second embodiment, a carrier ion is a lithium ion, but the present disclosure is not limited thereto. In the present disclosure, the carrier ion may be an alkali metal ion different from a lithium ion (e.g., a sodium ion) or an alkaline-earth metal ion (e.g., a calcium ion or a magnesium ion).

## Claims

1. A battery (1A; 1B) comprising:
a first electrode body (11A; 11B; 11C);
a first current collector (12); and
a second electrode body (13), wherein:
the first electrode body (11A; 11B; 11C), the first current collector (12), and the second electrode body (13) are laminated in the order of the first electrode body (11A; 11B; 11C), the first current collector (12), and the second electrode body (13) along a lamination direction (D);
the first electrode body (11A; 11B; 11C) includes a first electrode active material layer (111), an electrolyte layer (112), and a second electrode active material layer (113) in the order of the first electrode active material layer (111), the electrolyte layer (112), and the second electrode active material layer (113) along the lamination direction (D);
the second electrode body (13) includes the first electrode active material layer (111), the electrolyte layer (112), and the second electrode active material layer (113) in the order of the first electrode active material layer (111), the electrolyte layer (112), and the second electrode active material layer (113) along the lamination direction (D);
the first electrode body (11A; 11B; 11C) has a plurality of first laminate end faces (S11AC; S11AD; S11AE; S11AF; S11BC; S11BD; S11BE; S11BF);
the second electrode body (13) has a plurality of second laminate end faces (S13C; S13D; S13E; S13F);
at least one of the first laminate end faces (S11AC; S11AD; S11AE; S11AF; S11BC; S11BD; S11BE; S11BF) of the first electrode body (11A; 11B; 11C) includes an overlapping laminate end face (S11AC; S11BD) that overlaps with a site in the second electrode body (13) different from the second laminate end faces (S13C; S13D; S13E; S13F) when viewed from the lamination direction (D);
the first electrode body (11A; 11B; 11C) further has an end region (R11A1; R11B1) and a different region (R11A2; R11B2) different from the end region (R11A1; R11B1);
the end region (R11A1; R11B1) includes the overlapping laminate end face (S11AC; S11BD) of the first electrode body (11A; 11B; 11C); and
a thickness (L1; L7) of the end region (R11A1; R11B1) is smaller than a thickness (L2; L8) of the different region (R11A2; R11B2).

2. The battery (1A; 1B) according to claim 1, wherein the thickness (L1; L7) of the end region (R11A1; R11B1) gradually decreases toward the overlapping laminate end face (S11AC; S11BD).

3. The battery (1B) according to claim 1, wherein the end region (R11A1) has a step portion such that a thickness on the overlapping laminate end face (S11AC) side is smaller than a thickness on a different portion of the end region (R11A1) from the step portion.

4. The battery (1A; 1B) according to claim 1, wherein the overlapping laminate end face (S11AC; S11BD) lies in a first plane that is different from a second plane that one of the second laminate end faces (S13C; S13D; S13E; S13F) of the second electrode body (13) lies in.

5. The battery (1A; 1B) according to claim 1, wherein a first plane that at least one of the first laminate end faces (S11AC; S11AD; S11AE; S11AF; S11BC; S11BD; S11BE; S11BF) of the first electrode body (11A; 11B; 11C) lies in is the same as a second plane that one of the second laminate end faces (S13C; S13D) of the second electrode body (13) lies in.

6. The battery (1A; 1B) according to claim 1, wherein:
a thickness (L3; L9) of the first electrode active material layer (111) in the end region (R11A1; R11B1) is smaller than a thickness (L4; L10) of the first electrode active material layer (111) in the different region (R11A2; R11B2) different from the end region (R11A1; R11B1); and
each of the electrolyte layer (112) and the second electrode active material layer (113) has a uniform thickness.

7. The battery (1A; 1B) according to claim 6, wherein the first electrode body (11A; 11B; 11C) includes the first electrode active material layer (111), the electrolyte layer (112), the second electrode active material layer (113), a second current collector (114), the second electrode active material layer (113), the electrolyte layer (112), and the first electrode active material layer (111) in the order of the first electrode active material layer (111), the electrolyte layer (112), the second electrode active material layer (113), the second current collector (114), the second electrode active material layer (113), the electrolyte layer (112), and the first electrode active material layer (111) along the lamination direction (D).

8. The battery (1A; 1B) according to claim 1, wherein:
an end misalignment amount (L5; L11) in a section of the battery (1A; 1B) cut along the lamination direction (D) is larger than a length (L6; L12) of the end region (R11A1; R11B1) in an orthogonal direction orthogonal to the lamination direction (D); and
the end misalignment amount (L5; L11) refers to a length between the overlapping laminate end face (S11AC; S11BD) of the first electrode body (11A; 11B; 11C) and the laminate end face (S13C; S13D) of the second electrode body (13) in the orthogonal direction.

9. The battery (1A; 1B) according to claim 1, wherein the number of the first electrode bodies (11A; 11B; 11C) is at least one and the number of the second electrode bodies (13) is two or more.

10. The battery (1A; 1B) according to claim 1, wherein the electrolyte layer (112) contains a solid electrolyte.

11. The battery (1A; 1B) according to claim 1, wherein the different region (R11A2; R11B2) is adjacent to the end region (R11A1; R11B1) in a direction perpendicular to the lamination direction (D).

12. The battery (1A; 1B) according to claim 11, wherein the thickness (L1; L7) of the end region (R11A1; R11B1) gradually decreases toward the overlapping laminate end face (S11AC; S11BD) in a direction from the different region (R11A2; R11B2) toward the overlapping laminate end face (S11AC; S11BD).

13. A battery production method for producing the battery (1A) according to claim 1, the method comprising:
preparing a first electrode body semi-product in which the first electrode active material layer (111) having a uniform thickness, the electrolyte layer (112) having a uniform thickness, and the second electrode active material layer (113) having a uniform thickness are laminated in the order of the first electrode active material layer (111), the electrolyte layer (112), and the second electrode active material layer (113) along the lamination direction (D); and
reducing a thickness of at least one of the first electrode active material layer (111) and the second electrode active material layer (113) of the first electrode body semi-product in the end region (R11A1; R11B1).

14. The battery production method according to claim 13, wherein the end region (R11A1; R11B1) includes at least one of an end of the first electrode active material layer (111) of the first electrode body semi-product and an end of the second electrode active material layer (113) of the first electrode body semi-product.
